# EUROPEAN PATENT APPLICATION

(11) **EP 4 012 936 A1**
(43) Date of publication of application: **15.06.2022**
(21) Application number: 20465598.9
(22) Date of filing: 14.12.2020
(51) Int. Cl.: H04B 5/00

(54) **WIRELESS CHARGING DEVICE, VEHICLE COMPRISING A CHARGING DEVICE AND METHOD TO OPERATE A CHARGING DEVICE**

(71) Applicant: Continental Automotive GmbH, 30165 Hannover (DE)
(72) Inventor: Craciun, Serban, 81739 Munich (DE); Saracin, Cristian, 81739 Munich (DE)
(74) Representative: Continental Corporation

(57) **Abstract**

The invention is concerned with a wireless charging device (1) comprising an NFC-transmitter (12) configured to detect a NFC-device (3, 8) in a predefined space (9) related to a charging coil (4) by means of a predefined request-response-communication-process with the NFC-device (3, 8), wherein the NFC-transmitter (12) is configured to provide during the predefined request-response-communication-process an alternating magnetic field (5) at a predefined magnetic field strength (H1) and to then individually address the detected NFC-device (3, 8) by means of a request-signal (TX2) during a following predefined identification-communication-process. The invention is characterized in that the NFC-transmitter (12) is configured to provide during the predefined identification-communication-process an magnetic field (5) at a predefined reduced magnetic field strength (H2), and to identify the detected NFC-device (3, 8) as a passive NFC-device (8), if a predefined response signal (RX2), requested by the request signal (TX2) during the predefined identification-communication-process is missing.

## Description

The invention is concerned with wireless charging device a vehicle comprising a wireless charging device and a method to operate a wireless charging device.

Cell phones or other battery operated devices may be charged by wireless charging systems. These wireless charging systems are usually based on inductive charging methods. To provide power to the mobile device an energy supplier generates an alternating magnetic field by means of a charging coil or an array of charging coils. The mobile device comprises a reception coil and has to be situated in the alternating magnetic field during charging. The alternating magnetic field induces a current in the reception coil of the mobile device that can be used to charge the battery of the mobile device.

As the alternating magnetic fields induce current in all conducting structures, these alternating magnetic fields can be a threat for devices situated in a space close to the charging coils. RFID devices are particularly at risk here. They don't comprise an energy storage and have to be supplied with external power in order to operate. Therefore, RFID devices comprise charging coils to receive power of an alternating magnetic field. The alternating magnetic fields to operate RFID devices have a lower magnetic field strength than the alternating magnetic fields used to charge mobile devices. Therefore, the electronics of RFID devices is not adapted to the higher magnetic field strengths of the alternating magnetic fields of charging devices and may be damaged, when the device is close to an operating charging device. Therefore, it is necessary to keep RFID device outside an endangered space of a charging coil during wireless charging.

Some wireless charging devices comprise NFC readers that are configured to detect the presence of RFID cards in the endangered space of the charging coil before the charging process starts. RFID cards may also be emulated by mobile phones. To distinguish physical and emulated RFID cards, NFC readers are configured to identify emulated RFID cards by means of several protocol based methods. In case of a detection of a physical NFC card in a predefined space related to the charging coil, the charging process will be denied or performed with a reduced magnetic field strength.

Sometimes the detection of NFC cards in the predefined space related to the charging coil fails due to several reasons. In a worst-case a NFC card situated in the predefined space is not be detected by the NFC reader and the NFC card is damaged during the charging process.

It is an object of the present invention to provide a wireless charging device providing a reliable method to identify passive NFC devices in a predefined space related to the charging coil.

The object is accomplished by the subject matter of the independent claims. Advantageous developments with convenient and non-trivial further embodiments of the invention are specified in the dependent claims, the following description, and the drawings.

The invention provides a wireless charging device, configured to additionally identify passive NFC devices. In other words, the invention is related to a wireless charging device, configured to charge devices that is configured to detect passive NFC devices. The wireless charging device comprises a charging coil configured to provide power by means of an alternating magnetic field. In other words, the wireless charging device comprises the charging coil to generate an alternating magnetic field to induce a current in a charging coil in the device to be supplied. The wireless charging device comprises an NFC transmitter configured to detect an NFC device in a predefined space related to the charging coil by means of a predefined request-response-communication process with the NFC device. In other words, the wireless charging device is configured to detect passive and active NFC devices in the predefined space by means of the NFC transmitter. During the request-response-communication process the NFC transmitter may send out a predefined request signal. An NFC device situated in the predefined space receiving the request signal may send a predefined response signal in response to the reception of the request signal. Due to the reception of the response signal of the NFC device by the NFC transmitter, the NFC transmitter may detect the presence of the NFC device in the predefined space. The predefined space may be a volume defined by its spatial arrangement in relation to the charging coil in which a magnetic field strength of the alternating magnetic field may be above a predefined magnetic field strength during charging process. The magnetic field strength of the alternating magnetic field in the predefined space may damage RFID cards. Therefore, it has to be ensured that no passive NFC device is situated in the predefined space during the charging process.

The NFC transmitter is configured to provide during the predefined request response communication process an alternating magnetic field at the predefined magnetic field strength that is higher than a predefined support magnetic field strength necessary to drive passive NFC devices. In other words, the NFC transmitter provides the predefined magnetic field strength during the request response communication process that is high enough to supply passive NFC devices in the predefined space with enough energy to operate. Therefore, it is sure that the NFC device is supplied with enough power to participate in the request response communication process. In the next step NFC transmitter is configured to individually address the detected NFC device by means of a request signal during a predefined identification communication process. In other words, the NFC transmitter is configured to perform the predefined identification communication process with NFC devices detected in the predefined space during the predefined request response communication process. The individually addressing of detected NFC devices means that communication is performed individually with each detected NFC device.

The NFC transmitter is configured to provide during the predefined identification communication process an magnetic field at the predefined reduced magnetic field strength that is lower than the predefined support magnetic field strength to drive passive NFC devices. In other words, the NFC transmitter provides a magnetic field during the identification communication process that is strong enough for NFC devices having their own energy source but that is too low to drive passive NFC devices that need at least a predefined support magnetic field strength. Therefore, active NFC devices do operate and passive NFC devices don't. The NFC transmitter may identify the detected NFC device as a passive NFC device if the predefined response signal requested by the request signal during the predefined identification communication process is missing. In other words, in case the detected NFC device sends a predefined response signal that is received by the NFC device the NFC transmitter identifies the respective NFC device as an active NFC device. In case the request signal during the predefined identification communication process is missing the respective NFC device is identified as a passive NFC device.

The invention has the advantage that the wireless charging device applies a simple method to identify passive NFC devices. The method is independent of protocol changes and capabilities of NFC emulators and is more reliable than common identification techniques.

The invention also comprises embodiments that provide additional technical advantages.

According to a further embodiment of the invention the wireless charging device is configured to provide a reduced charging power during a power transmission if the passive NFC device is detected in the predefined space related to the charging coil. In other words, the wireless charging device performs a charging process if a passive NFC device is detected in the predefined space but with a power that is reduced compared to the default power. The reduced charging power may be set to a level that is below a dangerous level for passive NFC-devices. Therefore, it is possible to perform charging processes even in case of presence of passive NFC devices in the predefined space.

According to a further embodiment of the invention the wireless charging device is configured to deny to perform a charging process if a passive NFC device is detected in the predefined space related to the charging coil. In other words, the charging device does not perform charging processes if a passive NFC device is identified in the predefined space. The embodiment has the advantage that a damage of RFID cards may be prevented.

According to further embodiment of the invention the wireless charging device is configured to provide during the predefined request response communication process an alternating magnetic field at the predefined magnetic field strength of at least 1.5 A/m in the predefined space related to the charging coil. In other words, the wireless charging device generates a magnetic field having a level of 1.5 A/m or more in the predefined space related to the charging coil. The embodiment has the advantage that the necessary magnetic field strength to drive a standard passive NFC device is provided during the request response communication process.

According to a further embodiment of the invention the wireless charging device is configured to provide during the predefined identification communication process an magnetic field with a predefined reduced magnetic field strength below 0.15 A/m in the predefined space related to the charging coil. In other words, during the identification communication process the magnetic field in the predefined space is below the predefined reduced magnetic field strength to operate a passive NFC device. The invention has the advantage that standard NFC devices may not operate during the identification communication process. Therefore, it can be sure that the device is a passive device if the response message is missing.

According to a further embodiment of the invention the wireless charging device is configured to provide a signal if a passive NFC device is detected in the predefined space related to the charging coil. In other words, the wireless charging device may send a signal to another device in case a passive NFC device is detected in the predefined space.

The invention comprises a vehicle comprising at least one wireless charging device.

The invention comprises a method to operate a wireless charging device configured to additionally identify passive NFC devices. In a first step an NFC transmitter of the wireless charging device detects an NFC device in the predefined space related to the charging coil by means of the predefined request response communication process with the NFC device. In other words, the NFC transmitter initiates the predefined recast response communication process to detect an NFC device in the predefined space. A NFC device situated in the predefined space will communicate with the NFC transmitter according to the predefined request response communication process. During the predefined request response communication process the NFC transmitter provides an alternating magnetic field at the predefined magnetic field strength that is higher than the predefined support magnetic field strength to drive passive NFC devices. In other words, the NFC transmitter provides an alternating magnetic field during the predefined request response communication process at the predefined magnetic field strength wherein the alternating magnetic field is sufficient to drive passive NFC device. The NFC transmitter individually addresses the detected NFC device by means of a request signal during a predefined identification communication process. In other words, after the detection of at least one NFC device the NFC transmitter individually communicates with the at least one detected NFC device by sending the predefined request signal to the detected NFC device during the predefined identification communication process. It is intended that the NFC transmitter provides during the predefined identification communication process an alternating magnetic field at a predefined reduced magnetic field strength that is lower than a predefined support magnetic field strength to drive passive NFC devices. In other words, the magnetic field provided by the NFC transmitter during the predefined identification process is not strong enough to operate passive NFC devices. The NFC transmitter identifies the detected NFC device as a passive NFC device if a predefined response signal requested by the request signal during the predefined identification communication processes is missing. In other words, in case the NFC transmitter does not receive a predefined response signal by the detected NFC device the NFC transmitter identifies the respective NFC device as a passive NFC device.

The invention also comprises the combinations of the features of the described embodiments.

In the following an exemplary implementation of the invention is described. The figures show:
Fig. 1 a schematic illustration of an embodiment of a wireless charging device; and
Fig. 2 a schematic illustration of a method to operate a wireless charging device.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

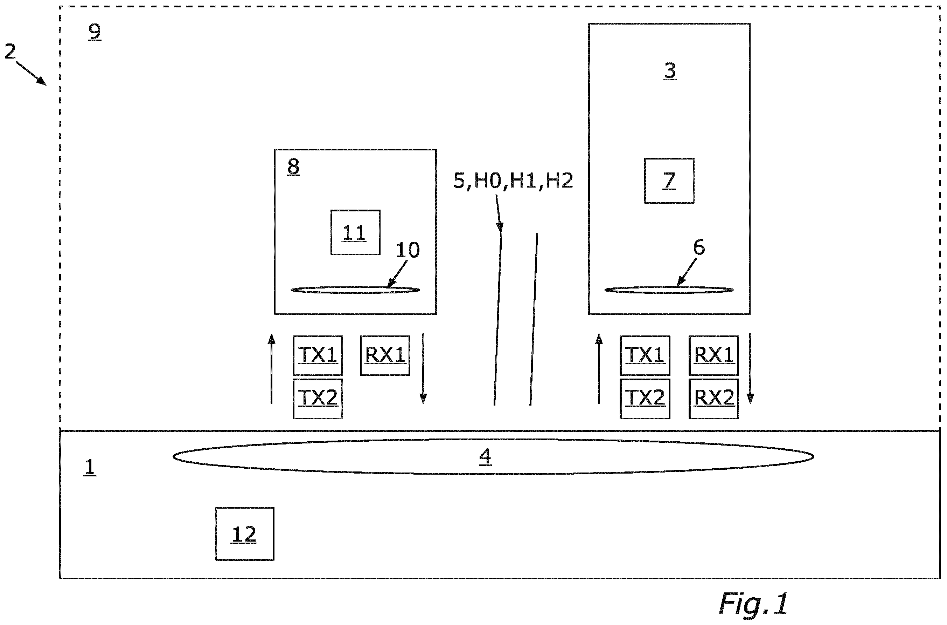

Fig. 1 shows a possible embodiment of a wireless charging device 1. The wireless charging device 1 may be arranged in a vehicle 2. The wireless charging device 1 may be configured to charge mobile devices 3. To charge the mobile device 3 the wireless charging device 1 may comprise a charging coil 4, configured to provide power by means of an alternating magnetic field 5. The magnetic field 5 provided by the wireless charging device 1 may have a predefined magnetic field strength. The magnetic field 5 may flow through a charging coil 6 of the mobile device 3 and induce a current that may be used to charge the battery 7 of the mobile device 3. The charging magnetic field strength of the magnetic field 5 may be too high for passive NFC devices 8. A passive NFC device 8 situated in a predefined space 9 related to the charging coil 4 of the wireless charging device 1 may receive the magnetic field 5. The magnetic field 5 may induce a current in the charging coil 10 of the passive device 8. The current may damage a control unit 11 of the passive device 8. The passive device 8 may be an NFC card or an RFID device. In order to prevent the damage of the passive NFC device 8 it has to be ensured that that no passive NFC device 8 is situated in the predefined space 9 when the charging process starts. In order to detect the presence of NFC devices 3, 8 in the predefined space 9 the wireless charging device 1 may comprise an NFC transmitter 12 configured to transmit and to receive NFC messages. To detect the presence of NFC devices in the predefined space 9 the NFC transmitter 12 may initiate a predefined request response communication process with an NFC device 3, 8 in the predefined space 9. During the predefined request response communication process the NFC transmitter 12 sends a request signal TX1. An NFC device 3 , 8 receiving the request signal TX1 will respond with the predefined response signal RX1 when the NFC transmitter 12 receives the response signal RX1 of the NFC device 3, 8 the presence of the NFC device 3 in the predefined space 9 is detected. During the request response communication process the NFC transmitter 12 may provide an alternating magnetic field at the predefined magnetic field strength that is higher than the predefined support magnetic field strength to drive passive NFC devices 8. Therefore, passive NFC devices 8 get enough power by the alternating magnetic field 5. When at least one NFC device 3, 8 is detected in the predefined space 9 the NFC transmitter 12 may start a predefined identification communication process with the detected NFC devices 3, 8. The NFC transmitter 12 may individually send a predefined request signal TX2 to the NFC devices 3, 8. During the identification communication process the NFC transmitter 12 provides a magnetic field 5 at a predefined reduced magnetic field strength that is lower than a predefined support magnetic field strength to drive passive NFC devices 8. Therefore, devices without a battery do not have enough power to operate. An active NFC device 3 receiving the TX2 signal answers with a predefined response signal RX2. When the NFC transmitter 12 receives the response signal RX2 of a NFC device 3 the respective NFC device 3 is an active NFC device 3. A passive NFC device 8 cannot operate at the predefined reduced magnetic field strength. Therefore, the passive NFC device 8 may not receive the request signal TX2 or it may receive the requested signal TX2 but may not answer with the response signal RX2 due to insufficient power. Therefore, if the response signal RX2 is missing the NFC device 8 may be identified as a passive NFC device 8.

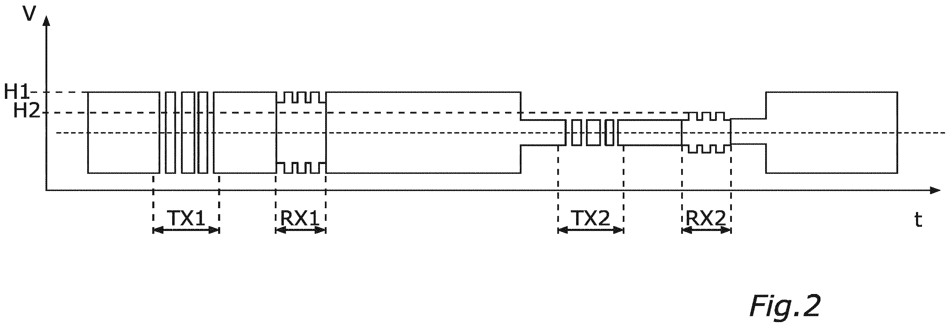

Fig. 2 shows a method to operate the wireless charger 1. Before the start of the charging process, the NFC transmitter 12 may perform the request response communication process, wherein the NFC transmitter 12 may provide a magnetic field at a predefined magnetic field strength. The NFC transmitter 12 may send the request signal TX1 by modulating the provided magnetic field. A NFC device 3 in the predefined space 9 may receive the request signal TX1 and may send the response signal RX1 by modulating the magnetic field. By receiving the response signal RX1, the NFC transmitter 12 detects the presence of the NFC device 3 in the predefined space 9. In order to determine whether the NFC device 3 is a passive or an active NFC device a predefined identification communication process with the NFC device 3 is initiated by the NFC transmitter 12. During the predefined identification communication process the NFC transmitter 12 provides an alternating magnetic field with the reduced magnetic field strength. The magnetic field strength is too low to induce the necessary current in a coil 10 of the passive NFC device 8. The NFC transmitter 12 may send a request signal TX2 by modulating the magnetic field. As a response of reception of the request signal TX2, an active NFC device 3 having an own energy source 7 may send a response signal RX2 by modulating the magnetic field. When the NFC transmitter 12 receives the response signal RX2, the respective NFC device 3 is identified as an active NFC device 3. If the response signal RX2 is missing the respective NFC device 3 is identified as a passive NFC device 8 because the magnetic field strength provided by the NFC transmitter 12 during the identification communication process is too low to drive passive NFC devices 8. If no passive NFC devices detect at in the predefined space 9 the wireless charging device 1 may initiate the charging process by generating an alternating magnetic field 5 by means of the charging coil 4 to supply power to a mobile device situated in the predefined space 9. In case a passive NFC device 8 is detected in the predefined space 9 the initiation of the charging process may be denied or performed with the reduced magnetic field strength.

Overall, the example shows how a solution to detect passive NFC devices is provided by the invention.

In a standard wireless charging system, the RFID cards are not detected as foreign objects and the wireless charger can damage the cards during charging if the card is present between the phone and the coil of the wireless charger.

The current method for preventing the destruction of an RFID NFC card is to embed in the wireless charging system an NFC reader and to scan before starting the wireless charging for the presence of NFC devices. If the NFC devices are found, then some mechanisms and scanning technics are used to distinguish if the NFC device is a physical card or it is emulated by the smartphone (most of the smartphones can also embed the NFC functionality). Finally, if RFID card is detected, then no wireless power will be provided, or wireless charging with reduced power.

The disadvantages of the prior art are that there are multiple scenarios (e.g. smartphone can emulate tags in multiple technologies; smartphone can emulate only one tag technology; smartphone can have NFC functionality disabled, but a physical card or cards are present on the back of the phone; and many others) when it cannot be distinguished if there is a RFID card or the smartphone emulates a card.
There are multiple algorithms developed, but none of them can guarantee 100% correct detection.

The presented solution is intended to solve the issue in detecting if there is a physical card or the smartphone is in card mode.

The proposed solution is to have an NFC antenna with its operating volume covering only the area where the wireless charging function is provided in order to limit the detection of NFC cards which are at no risk by damaging by wireless charging magnetic field (far away from charging coil). Before starting the wireless charging function, the NFC reader shall search for all NFC devices/technologies which are present above the charging coil. After the devices were detected, then each NFC device (or the device which is not sure if it is emulated by phone or is a physical card) shall be selected individually and checked by a presence check command, but this time with reduced field level. A physical card in order to operate requires a minimum 1.5A/m RF magnetic field intensity to be generated from the NFC reader, while a smartphone can operate with much less filed intensity because it does not get its power from the field, but from its internal battery.

When the presence check command is sent with reduced field level (< 0.15A/m) the physical card will not respond (power loss of its internal electronics) while the phone will see the command and will respond by the means of active load modulation. A clear distinction can be made if the selected NFC device is physical card or emulated by smartphone. The reduced field level can be made by reducing the supply voltage of the NFC output stage or by the means of external switches which add additional capacitance in the NFC antenna matching circuit and change the antenna impedance.

The advantages are that this method is simple and robust, can be implemented directly from digital protocol level, with very good detection of card vs. emulated card.

## Claims

1. Wireless charging device (1), configured to additionally identify passive NFC devices (8), comprising
- a charging coil (4), configured to provide charging power by means of an alternating magnetic field (5),
- an NFC-transmitter (12) configured to detect a NFC-device (3, 8) in a predefined space (9) related to the charging coil (4) by means of a predefined request-response-communication-process with the NFC-device (3), (8), wherein
the NFC-transmitter (12) is configured to
- provide during the predefined request-response-communication-process an alternating magnetic field (5) at a predefined magnetic field strength (H1), that is higher than a predefined support magnetic field strength (H0) to drive passive NFC-devices (8), and
- to individually address the detected NFC-device (3, 8) by means of a request-signal (TX2) during a predefined identification-communication-process,
**characterized in that** the NFC-transmitter (12) is configured to
- provide during the predefined identification-communication-process an magnetic field (5) at a predefined reduced magnetic field strength (H2), that is lower than the predefined support magnetic field strength (H0) to drive passive NFC-devices (8), and
- identify the detected NFC-device (3, 8) as a passive NFC-device (8), if a predefined response signal (RX2), requested by the request signal (TX2) during the predefined identification-communication-process is missing.

2. Wireless charging device (1) according to claim 1,
**characterized in that** the wireless charging device (1) is configured to provide a reduced charging power during a charging process, if a passive NFC-device (8) is detected in the predefined space (9) related to the charging coil (4).

3. Wireless charging device (1) according to one of the preceding claims,
**characterized in that** the wireless charging device (1) is configured to deny to start a charging process, if a passive NFC-device (8) is detected in the predefined space (9) related to the charging coil (4).

4. Wireless charging device (1) according to one of the preceding claims,
**characterized in that** the wireless charging device (1) is configured to provide during the predefined request-response-communication-process an alternating magnetic field at the predefined magnetic field strength (H1) of at least 1.5 A/m in the predefined space (9) related to the charging coil (4).

5. Wireless charging device (1) according to one of the preceding claims,
**characterized in that** the wireless charging device (1) is configured to provide during the predefined identification-communication-process an magnetic field at the predefined reduced magnetic field strength (H2) below 0.15 A/m in the predefined space (9) related to the charging coil.

6. Wireless charging device (1) according to one of the preceding claims,
**characterized in that** the wireless charging device (1) is configured to provide a signal, if a passive NFC-device is detected in the predefined space (9) related to the charging coil (4).

7. Vehicle (2) comprising a wireless charging device (1) according to one of the preceding claims.

8. Method to operate a wireless charging device (1), configured to additionally identify passive NFC devices (8), comprising the steps of
- NFC-transmitter (12) of the wireless charging device (1) detects an NFC-device (3, 8) in a predefined space (9) related to the charging coil (4) by means of a predefined request-response-communication-process with the NFC-device (3, 8), wherein
the NFC-transmitter (12) provides during the predefined request-response-communication-process an alternating magnetic field at a predefined magnetic field strength (H1), that is higher than a predefined support magnetic field strength (H0) to drive passive NFC-devices (8), and
- the NFC-transmitter (12) individually addresses the detected NFC-device (3, 8) by means of a request-signal (TX2) during a predefined identification-communication process,
**characterized in that**
- the NFC-transmitter (12) provides during the predefined identification-communication-process an magnetic field (5) at a predefined reduced magnetic field strength (H2), that is lower than the predefined support magnetic field strength H(0) to drive passive NFC-devices (8), and
- the NFC-transmitter (12) identifies the detected NFC-device (3, 8) as a passive NFC-device (8), if a predefined response signal (RX2), requested by the request signal (TX2) during the predefined identification-communication-process is missing.

## Amended claims

### Amended claims in accordance with Rule 137(2) EPC.

1. Wireless charging device (1), configured to additionally identify passive NFC devices (8), comprising
- a charging coil (4), configured to provide charging power by means of an alternating magnetic field (5),
- an NFC-transmitter (12) configured to detect a NFC-device (3, 8) in a predefined space (9) related to the charging coil (4) by means of a predefined request-response-communication-process with the NFC-device (3), (8), wherein
the NFC-transmitter (12) is configured to
- provide during the predefined request-response-communication-process an alternating magnetic field (5) at a predefined magnetic field strength (H1), that in the predefined space related to the charging coil is higher than a predefined support magnetic field strength (H0) to drive passive NFC-devices (8), and
- to individually address the detected NFC-device (3, 8) by means of a request-signal (TX2) during a predefined identification-communication-process,
**characterized in that** the NFC-transmitter (12) is configured to
- provide during the predefined identification-communication-process an magnetic field (5) at a predefined reduced magnetic field strength (H2), that in the predefined space related to the charging coil is lower than the predefined support magnetic field strength (H0) to drive passive NFC-devices (8), and
- identify the detected NFC-device (3, 8) as a passive NFC-device (8), if a predefined response signal (RX2), requested by the request signal (TX2) during the predefined identification-communication-process is missing.

2. Wireless charging device (1) according to claim 1,
**characterized in that** the wireless charging device (1) is configured to provide a reduced charging power during a charging process, if a passive NFC-device (8) is detected in the predefined space (9) related to the charging coil (4).

3. Wireless charging device (1) according to one of the preceding claims,
**characterized in that** the wireless charging device (1) is configured to deny to start a charging process, if a passive NFC-device (8) is detected in the predefined space (9) related to the charging coil (4).

4. Wireless charging device (1) according to one of the preceding claims,
**characterized in that** the wireless charging device (1) is configured to provide during the predefined request-response-communication-process an alternating magnetic field at the predefined magnetic field strength (H1) of at least 1.5 A/m in the predefined space (9) related to the charging coil (4).

5. Wireless charging device (1) according to one of the preceding claims, **characterized in that** the wireless charging device (1) is configured to provide during the predefined identification-communication-process an magnetic field at the predefined reduced magnetic field strength (H2) below 0.15 A/m in the predefined space (9) related to the charging coil.

6. Wireless charging device (1) according to one of the preceding claims, **characterized in that** the wireless charging device (1) is configured to provide a signal, if a passive NFC-device is detected in the predefined space (9) related to the charging coil (4).

7. Vehicle (2) comprising a wireless charging device (1) according to one of the preceding claims.

8. Method to operate a wireless charging device (1), configured to additionally identify passive NFC devices (8), comprising the steps of
- NFC-transmitter (12) of the wireless charging device (1) detects an NFC-device (3, 8) in a predefined space (9) related to the charging coil (4) by means of a predefined request-response-communication-process with the NFC-device (3, 8), wherein
the NFC-transmitter (12) provides during the predefined request-response-communication-process an alternating magnetic field at a predefined magnetic field strength (H1), that in the predefined space related to the charging coil is higher than a predefined support magnetic field strength (H0) to drive passive NFC-devices (8), and
- the NFC-transmitter (12) individually addresses the detected NFC-device (3, 8) by means of a request-signal (TX2) during a predefined identification-communication process,
**characterized in that**
- the NFC-transmitter (12) provides during the predefined identification-communication-process an magnetic field (5) at a predefined reduced magnetic field strength (H2), that in the predefined space related to the charging coil is lower than the predefined support magnetic field strength H(0) to drive passive NFC-devices (8), and
- the NFC-transmitter (12) identifies the detected NFC-device (3, 8) as a passive NFC-device (8), if a predefined response signal (RX2), requested by the request signal (TX2) during the predefined identification-communication-process is missing.
